(19) **Europäisches Patentamt / European Patent Office / Office européen des brevets**

(11) **EP 2 954 978 B1**

(12) **EUROPEAN PATENT SPECIFICATION**

(45) Date of publication and mention of the grant of the patent:
**20.05.2020 Bulletin 2020/21**

(21) Application number: **14748608.8**

(22) Date of filing: **22.01.2014**

(51) Int Cl.:
**B24B 37/00** *(2012.01)*  **C01F 17/00** *(2020.01)*
**C01G 23/00** *(2006.01)*  **C09K 3/14** *(2006.01)*
**H01L 21/304** *(2006.01)*  **C23C 18/12** *(2006.01)*

(86) International application number:
**PCT/JP2014/051229**

(87) International publication number:
**WO 2014/122992 (14.08.2014 Gazette 2014/33)**

(54) **CORE/SHELL-TYPE INORGANIC PARTICLES**

ANORGANISCHE KERN/HÜLLE-PARTIKEL

PARTICULES INORGANIQUES DE TYPE COEUR/COQUILLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.02.2013 JP 2013020228**

(43) Date of publication of application:
**16.12.2015 Bulletin 2015/51**

(73) Proprietor: **Konica Minolta, Inc.**
**Tokyo 100-7015 (JP)**

(72) Inventors:
• **ITO, Natsuki**
  **Tokyo 100-7015 (JP)**
• **MAEZAWA, Akihiro**
  **Tokyo 100-7015 (JP)**
• **TAKAHASHI, Atsushi**
  **Tokyo 100-7015 (JP)**
• **MIZOGUCHI, Keisuke**
  **Tokyo 100-7015 (JP)**
• **INUI, Chie**
  **Tokyo 100-7015 (JP)**

(74) Representative: **Henkel & Partner mbB**
**Patentanwaltskanzlei, Rechtsanwaltskanzlei**
**Maximiliansplatz 21**
**80333 München (DE)**

(56) References cited:
| | |
|---|---|
| WO-A1-2004/009726 | WO-A1-2005/035688 |
| WO-A1-2006/049197 | WO-A1-2008/044685 |
| WO-A1-2010/139603 | WO-A1-2012/101871 |
| WO-A1-2014/038536 | WO-A1-2014/038536 |
| WO-A1-2014/045939 | CN-A- 101 555 387 |
| JP-A- 2002 356 312 | JP-A- 2008 182 179 |
| JP-A- 2012 011 526 | |

• **KORTHOUT K ET AL: "Rare earth doped core-shell particles as phosphor for warm-white light-emitting diodes", APPLIED PHYSICS LETTERS, A I P PUBLISHING LLC, US, vol. 98, no. 26, 1 July 2011 (2011-07-01), pages 261919-261919, XP012141229, ISSN: 0003-6951, DOI: 10.1063/1.3606540**

**Description**

TECHNICAL FIELD

The present invention relates to inorganic core/shell particles contained in an abrasive material, more specifically, an inorganic core/shell particle including a core containing an element, such as yttrium, and a shell containing an element, such as yttrium, and cerium.

BACKGROUND ART

Abrasive materials traditionally used in precision polishing for finishing of optical glass or semiconductor devices are oxides of rare earth elements, mainly composed of cerium oxide and additionally containing, for example, lanthanum oxide, neodymium oxide, or praseodymium oxide. Although other abrasive materials, for example, diamond, iron oxide, aluminum oxide, zirconium oxide, and colloidal silica are also known, cerium oxide has been widely used, which is advantageous from the viewpoint of its high polishing rate and low surface roughness of polished workpieces.

Unfortunately, cerium oxide is unevenly distributed over the world and is not stably supplied. Accordingly, there is a demand for establishing a method of producing an abrasive material that can polish workpieces with high accuracy at a reduced amount of cerium oxide.

For example, NPL 1 proposes a method for preparing particles having narrow particle size distribution by heating and stirring an aqueous cerium nitrate solution, an aqueous yttrium nitrate solution, and an aqueous solution containing urea.

When the particles produced by the method of NPL 1 were fired and investigated for the effect as an abrasive material, unfortunately, the material exhibited a low polishing rate. A reduction in the polishing rate is probably caused by a low concentration of cerium on the surfaces of the particles due to an element (yttrium) other than cerium uniformly mixed with cerium for controlling the particle shape and the particle size distribution.

PTL 1 describes a method for preparing a cerium-based abrasive material having a crystallite diameter of 20 to 40 nm (200 to 400 Å) by firing at a temperature of 850°C to 1100°C for 1 to 10 hr. In this method, a cerium-based abrasive material is prepared by mixing a mixed rare earth oxide and a mixed rare earth fluoride and pulverizing the mixture.

Unfortunately, the cerium-based abrasive material prepared by the method of PTL 1 cannot provide a sufficiently high polishing rate due to low concentration of cerium on the outermost surface of the particle.

Examples of workpieces include glass substrates for hard disks. In order to increase the recording density of a hard disk, the surface roughness of a glass substrate is further reduced to decrease the distance between the glass substrate and a magnetic head in recent trends.

Unfortunately, a reduction in the average diameter of particles contained in an abrasive material for reducing the surface roughness leads to a reduction in polishing rate and a reduction in production efficiency.

Furthermore, in glass substrates for hard disks, demands for improvements in mechanical characteristics, in particular, hardness and rigidity, are increasing yearly for a reduction in oscillation of disks rotating at high speeds. In order to satisfy such mechanical characteristics, reinforced glass substrates mainly composed of aluminosilicate and crystallized glass substrates mainly composed of lithium silicate have been widely used.

Since these glass substrates have high chemical resistance and are hard, they cannot be readily processed, and thus show a significantly low polishing rate compared to polishing of ordinary glass substrates. In addition, these glass substrates are harder than ordinary glass substrates and are polished under application of a higher pressure compared to the case of polishing ordinary glass substrates . Such glass substrates therefore have a disadvantage of ready formation of scratches on the surfaces.

PTL 2 discloses a method for producing polishing-material particles, the method comprising the steps of (a) forming a salt of at least one element selected from the group consisting of Al, Sc, Ti, V, Cr, Mn, Fe, Co, Ni, Cu, Zn, Ga, Ge, Zr, In, Sn, Y, Gd, Tb, Dy, Ho, Er, Tm, Yb, Lu, W, Bi, Th, and alkali earth metals and forming an inner layer of a precursor of the polishing material particle mainly composing the salt of the element, (b) adding for a predetermined amount of time an aqueous solution prepared with the salt formed in step (a) and a salt of Ce in a reaction solution in which the salt of the element formed in the inner layer forming is dispersed, and forming an outer layer of the precursor of the polishing material particle on an outer side of the inner layer, the outer layer including a salt of at least one element selected from the group consisting of Al, Sc, Ti, V, Cr, Mn, Fe, Co, Ni, Cu, Zn, Ga, Ge, Zr, In, Sn, Y, Gd, Tb, Dy, Ho, Er, Tm, Yb, Lu, W, Bi, Th, and alkali earth metals and a salt of Ce, (c) separating the precursor of the polishing material particle with the outer layer formed in the outer layer forming from the reaction solution, and (d) baking the precursor of the polishing material particle obtained in the separating in the air or in an oxidizing atmosphere.

PTL 3 discloses a method for producing polishing-material particles, the method comprising the steps of (a) a core layer forming step of forming a core layer as an abrasive material particle precursor by adding an aqueous solution prepared with a salt of a first element to an aqueous solution prepared with the salt of the first element at a different density, the core layer containing the salt of the first element as a principal component, the first element being formed with at least one element selected from the group consisting of Al, Sc, Ti, V, Cr, Mn, Fe, Co, Ni, Cu, Zn, Ga, Ge, Zr, In, Sn, Y, Gd, Tb, Dy, Ho, Er, Tm, Yb, Lu, W, Bi, Th, and alkaline earth metals, (b) an intermediate layer forming step of forming an intermediate layer as an abrasive material particle precursor outside the core layer by adding an aqueous solution prepared with a salt of a second element formed with at least one element selected from the group consisting of Al, Sc, Ti, V, Cr, Mn, Fe, Co, Ni, Cu, Zn, Ga, Ge, Zr, In, Sn, Y, Gd, Tb, Dy, Ho, Er, Tm, Yb, Lu, W, Bi, Th, and alkaline earth metals, and a salt of Ce, to a reaction solution having the core layer formed therein and the salt of the first element dispersed therein, the intermediate layer containing the salt of the second element and the salt of Ce, (c) a shell layer forming step of forming a shell layer as an abrasive material particle precursor outside the intermediate layer by adding an aqueous solution prepared with a salt of Ce to a reaction solution having the intermediate layer formed therein and the salts of the second element and Ce dispersed therein, the shell layer containing the salt of Ce as a principal component, (d) a solid/liquid separating step of performing solid/liquid separation to separate the abrasive material particle precursor from a reaction solution obtained through the shell layer forming step, and (e) a calcining step of calcining the abrasive material particle precursor obtained in the solid/liquid separating step in air or an oxidizing atmosphere.

PTL 4 discloses a method for producing a rare-earth polishing material which has each of a positive cooperative function in the polishing process, a good cutting function on a material with high hardness, an elastic buffer function on a material with low hardness and high cutting capability, and which does not generate scratches. The rare-earth polishing material has an average granule size of 0.1 to 2 . 0 μm, a specific surface area after calcination at 900°C of less than 15 $m^2$/g and a dispersity of less than 1.5, and comprises 50 to 99 mass% of rare earth, 0.9 to 50 mass% of other components and less than 0.1 mass% of unavoidable impurities. The inner core of the rare-earth polishing material is an inorganic compound taking rare-earth oxide as a main body, and the shell is an inorganic compound containing the rare-earth oxide or/and fluoride.

PRIOR ART LITERATURES

PATENT LITERATURE

PTL 1: Japanese Patent Laid-Open No. 2006-97014
PTL 2: International Patent Application Publication No. WO 2014/038536 A1
PTL 3: International Patent Application Publication No. WO 2014/045939 A1
PTL 4: Chinese Patent Application Publication No. CN 101 555 387 A

NON-PATENT LITERATURE

NPL 1: J. Am. Ceram. Soc., Vol. 71, No. 10, pp. 845-853 (1988)

SUMMARY OF THE INVENTION

PROBLEMS TO BE SOLVED BY THE INVENTION

An object of the present invention, which has been made in view of the above-described problems and circumstances, is to provide an inorganic core/shell particle to be contained in an abrasive material that contains a reduced amount of cerium, can polish harder workpieces at a high polishing rate, and can decrease the surface roughness of the workpieces.

MEANS FOR SOLVING PROBLEMS

The present inventors have found, in the process of investigation on solutions for achieving the above-mentioned object, that an inorganic core/shell particle having a core containing a salt of at least one element selected from yttrium (Y), titanium (Ti), strontium (Sr), barium (Ba), samarium (Sm), europium (Eu), gadolinium (Gd), and terbium (Tb) and a shell containing a salt of at least one element selected from these eight elements and a salt of cerium (Ce) is effective when the crystallites in the shell have an average diameter within a specific range, and have arrived at the present invention. The invention is defined by the claims.

Accordingly, the present invention relates to an inorganic core/shell particle to be contained in an abrasive material, the inorganic core/shell particle including:

a core containing a salt of at least one element selected from yttrium (Y), titanium (Ti), strontium (Sr), barium (Ba), samarium (Sm), europium (Eu), gadolinium (Gd), and terbium (Tb); and

a shell containing a salt of at least one element selected from these eight elements and a salt of cerium (Ce), wherein the shell includes crystallites having an average diameter within a range of 4 to 30 nm.

EFFECTS OF THE INVENTION

The inorganic core/shell particle of the present invention can reduce the amount of cerium and provide a high polishing rate to harder workpieces and can reduce the surface roughness of the workpieces.

Although the mechanism of expression or function of the effects of the present invention has not been revealed, the reasons are believed as follows.

When the crystallites in the shell of an inorganic core/shell particle have an average diameter within a range of 4 to 30 nm, the shell of the inorganic core/shell particle probably can have a sufficient hardness for polishing.

BRIEF DESCRIPTION OF DRAWINGS

Fig. 1 is a schematic diagram illustrating a structure of an inorganic core/shell particle to be contained in an abrasive material.

Fig. 2 is a schematic diagram illustrating the crystallite of a particle and the particle diameter.

Fig. 3 is a schematic diagram showing a flow of a process of producing an abrasive material.

Fig. 4 is a graph schematically showing variations in temperature in calcination and firing steps.

EMBODIMENT FOR CARRYING OUT THE INVENTION

The inorganic core/shell particle of the present invention is contained in an abrasive material and has a core containing a salt of at least one element selected from yttrium (Y), titanium (Ti), strontium (Sr), barium (Ba), samarium (Sm), europium (Eu), gadolinium (Gd), and terbium (Tb) and a shell containing a salt of at least one element selected from these eight elements and a salt of cerium (Ce), where the crystallites in the shell have an average diameter within a range of 4 to 30 nm. This distinctive feature is a technical characteristic common to the invention.

In an embodiment, in order to enhance the advantageous effects of the present invention, the crystallites in the core preferably have an average diameter within a range of 4 to 45 nm. This probably allows the crystallites forming the core to sufficiently grow and gives an inorganic core/shell particle having high durability against the pressure during polishing.

In addition, the average diameter of the crystallites in the core is preferably at least 1 nm larger than the average diameter of the crystallites in the shell. As a result, the core is an aggregate of crystallites having larger crystallite diameters, which probably provides an inorganic core/shell particle that is highly resistive to the pressure during polishing and can reduce the surface roughness of workpieces due to the small crystallite diameter of the shell.

Alternatively, the average diameter of the crystallites in the shell is preferably at least 1 nm larger than the average diameter of the crystallites in the core. As a result, the shell, the pressure applied to which is higher than that applied to the core, probably can maintain a high polishing rate for a long time without falling off to give an inorganic core/shell particle having excellent durability.

The amount of the salt of cerium contained in the shell is preferably within a range of 30 to 90 mol%. Such an amount can achieve compatibility between a high polishing rate and high durability.

The present invention, its components, and embodiments implementing the present invention will now be described in detail. It should be noted that, throughout the specification, the term "to" indicating the numerical range is meant to be inclusive of the lower and upper limits represented by the numerals given before and after the term.

<Outline of inorganic core/shell particle P>

The inorganic core/shell particle P is contained in an abrasive material and has a core containing a salt of at least one element selected from yttrium (Y), titanium (Ti), strontium (Sr), barium (Ba), samarium (Sm), europium (Eu), gadolinium (Gd), and terbium (Tb) and a shell containing a salt of at least one element selected from these eight elements and a salt of cerium (Ce), where the crystallites in the shell have an average diameter within a range of 4 to 30 nm.

Some common abrasive materials are available in a slurry form prepared by dispersing abrasive particles of, for example, red iron oxide ($\alpha Fe_2O_3$), cerium oxide, aluminum oxide, manganese oxide, zirconium oxide, or colloidal silica, in water or oil.

The present invention relates to an inorganic core/shell particle P containing cerium that can be applied to chemical mechanical polishing (CMP) performing polishing by both physical and chemical actions for achieving a sufficiently high polishing rate while maintaining high-precision flatness in polishing of semiconductor devices or glass. The present invention will now be described in detail.

<Structure of inorganic core/shell particle>

The term "inorganic core/shell particle" refers to an inorganic crystal particle having a crystal structure composed of a core (also referred to as "core portion" or "inner core portion") constituting the inner part containing the central part of the inorganic crystal particle and a shell (also referred to as "shell layer") constituting the outermost shell part (also referred to as "outermost layer") of the inorganic crystal particle.

The core may have a structure including a plurality of layers. The boundary or the interface between the core and the shell may be clear or may be unclear due to mixing of the component of the core and the component of the shell near the boundary.

The shape of the core/shell structure of the inorganic core/shell particle P according to the present invention can be observed by visual inspection of the boundary or the interface between the core and the shell with, for example, a transmission electron microscope (TEM).

That is, for example, inorganic core/shell particles P according to the present invention are sufficiently dispersed in a cold curable epoxy resin to be embedded therein and are then dispersed in fine styrene powder of about 100 nm in diameter, followed by pressure molding. The resulting block is optionally dyed with triruthenium tetroxide or triruthenium tetroxide and triosmium tetroxide and is cut out into a flake sample by a microtome having a diamond blade. The sample is photographed by a transmission electron microscope at a magnification of about 10000 such that the cross-section of one inorganic core/shell particle P comes within the view. In the photograph, the boundary or the interface between the core and the shell is visually investigated.

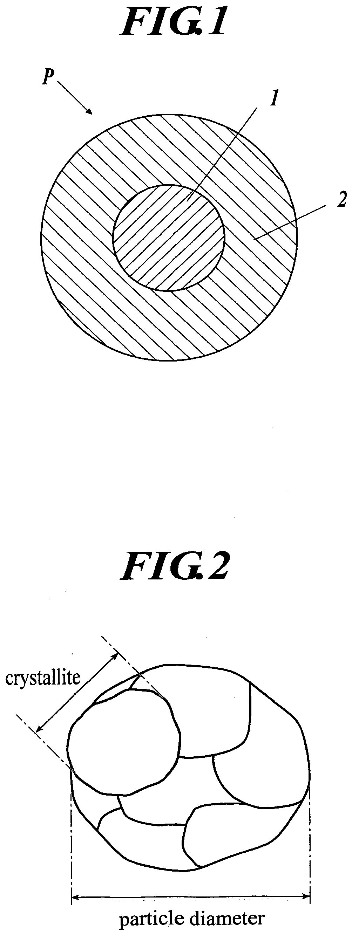

Specifically, the inorganic core/shell particle P according to the present invention preferably has a bilayer structure including a core 1 containing the center and a shell 2 on the outside of the core 1, such as the embodiment shown in Fig. 1.

<Crystallite diameter of inorganic core/shell particle P>

The characteristic feature is that the crystallites in the shell 2 have an average diameter within a range of 4 to 30 nm. Here, the term "crystallite diameter" refers to the size of a micro-crystal present as a complete single crystal in a polycrystalline particle (see Fig. 2). The crystallite diameter can be measured by an X-ray diffraction (XRD) method and can be calculated by the Scherrer equation:

$$D = K\lambda/\beta\cos\theta \quad (1).$$

In the equation (1), K is a Scherrer constant and is 0.9 in the calculation of the crystallite diameter; $\lambda$ is the wavelength of the X-ray; $\beta$ is the half-width of the diffraction line; and $\theta$ is the Bragg angle of the diffraction line.

The resulting crystallite diameter represents the size of a crystal growing in a single direction in a crystal particle. A smaller crystallite diameter indicates that the crystallite growing in a specific direction in a crystal particle is small. Firing at an appropriate temperature for an appropriate time allows crystallites to grow and to form a crystal particle having a large diameter.

Accordingly, a large crystallite diameter leads to a large growth of crystallites in a single direction to give hard particles, whereas a small crystallite diameter leads to small growth in a single direction to give soft particles.

The crystallites in the shell 2 preferably have an average diameter within a range of 4 to 30 nm. Such a diameter can achieve a high polishing rate for harder glass substrates, and can reduce the surface roughness of workpieces.

The crystallites in the core 1 preferably have an average diameter within a range of 4 to 45 nm. As a result, the crystallites forming the core 1 probably can sufficiently grow to give inorganic core/shell particle P having high durability against the pressure during polishing.

The average diameter of the crystallites in the core 1 is preferably at least 1 nm larger than the average diameter of the crystallites in the shell 2. As a result, the core 1 is an aggregate of crystallites having larger diameters, which probably provides inorganic core/shell particles P that are highly resistive to the pressure during polishing and can reduce the surface roughness of workpieces due to the small crystallite diameter of the shell 2.

Alternatively, the average diameter of the crystallites in the shell 2 is preferably at least 1 nm larger than the average diameter of the crystallites in the core 1. The shell 2 undergoing a pressure higher than that applied to the core 1 probably can maintain a high polishing rate for a long time without falling off to give an inorganic core/shell particle P having excellent durability.

<Composition of inorganic core/shell particle P>

The core 1 contains a salt of at least one element selected from yttrium (Y), titanium (Ti), strontium (Sr), barium (Ba), samarium (Sm), europium (Eu), gadolinium (Gd), and terbium (Tb), for example, contains yttrium oxide as a main component (60 mol% or more). The salt, such as yttrium oxide, is barely broken by the stress during polishing, compared to cerium oxide. The core 1 is composed of a seed crystal formed in the core-forming step A and a basic carbonate salt formed on the outside of the seed crystal.

The core 1 may further contain a salt of at least one element selected from the group consisting of Ce, Al, Sc, V, Cr, Mn, Fe, Co, Ni, Cu, Zn, Ga, Ge, Zr, In, Sn, Y, Dy, Ho, Er, Tm, Yb, Lu, W, Bi, Th, and alkaline earth metals.

The shell 2 contains a salt of at least one element selected from yttrium (Y), titanium (Ti), strontium (Sr), barium (Ba), samarium (Sm), europium (Eu), gadolinium (Gd), and terbium (Tb), such as yttrium oxide, and contains a salt of cerium (Ce), such as cerium oxide.

The shell 2 may further contain at least one element selected from the group consisting of Al, Sc, V, Cr, Mn, Fe, Co, Ni, Cu, Zn, Ga, Ge, Zr, In, Sn, Dy, Ho, Er, Tm, Yb, Lu, W, Bi, Th, and alkaline earth metals, in addition to the salt of at least one element selected from yttrium (Y), titanium (Ti), strontium (Sr), barium (Ba), samarium (Sm), europium(Eu), gadolinium(Gd), and terbium(Tb) and a salt of cerium.

Although the concentration distribution in the shell 2 may be uniform, in a preferred embodiment, the concentration of cerium oxide continuously increases from the center of the inorganic core/shell particle P toward the surface. Specifically, in the shell 2, the proportion of yttrium oxide in the composition near the core 1, i.e., on the center side of the inorganic core/shell particle P is high; and the proportion of cerium oxide in the composition in the shell 2 continuously increases from the center side of the inorganic core/shell particle P toward the surface.

The proportion of the salt of cerium contained in the shell 2 is preferably within a range of 30 to 90 mol%. Such a proportion can achieve compatibility between a high polishing rate and high durability.

The change in the composition of the shell 2 is a mere example, and the proportion of cerium oxide may continuously increase from the core 1 and may be constant in a predetermined region on the outermost. The shape of the inorganic core/shell particle P should not be limited to a sphere and may be, for example, an approximately ellipse.

<Diameter of inorganic core/shell particle P>

The core 1 preferably has a particle diameter within a range of 0.015 to 1.1 $\mu$m. In this range, the particle can maintain high durability against the pressure during polishing.

The shell 2 preferably has a thickness within a range of 0.0025 to 0.45 $\mu$m. In this range, inorganic core/shell particles P having monodispersity, a high polishing rate, and excellent durability can be produced.

Although the requirements for the particle diameter of the abrasive particles contained in an abrasive material vary depending on the use, micronization of the abrasive particles contained in an abrasive material is required with an increase in the finished surface precision after polishing. For example, an average particle diameter of not larger than 2.0 $\mu$m is necessary for use in a process of producing semiconductor devices.

Although the finished surface precision after polishing increases with a decrease in the particle diameter of the abrasive material, the polishing rate tends to decrease with the particle diameter. A particle diameter of less than 0.02 $\mu$m cancels the superiority of the polishing rate of a cerium abrasive material to that of other abrasive materials, such as colloidal silica.

Accordingly, the inorganic core/shell particles P preferably have an average diameter within a range of 0.02 to 2.0 $\mu$m, more preferably 0.05 to 1.5 $\mu$m.

In order to enhance the plane precision after polishing, it is desirable to use abrasive material having particle diameters as uniform as possible and a smaller coefficient of variation in the particle size distribution.

<Method of producing abrasive material>

A method of producing an abrasive material containing inorganic core/shell particles P each consisting of a core 1 and a shell 2 will now be described.

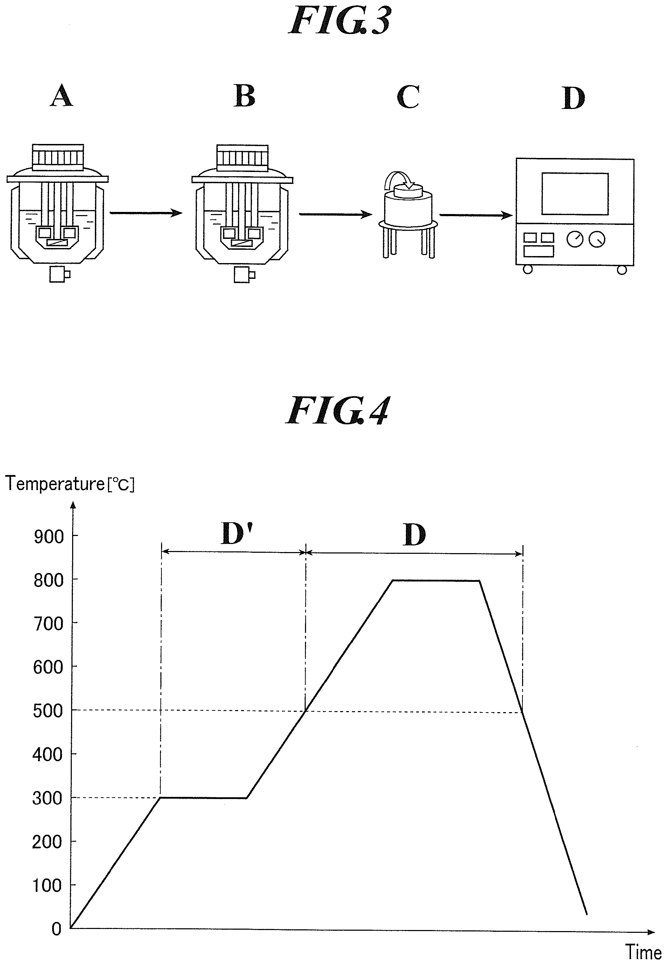

A preferred embodiment of the method of producing inorganic core/shell particles P (hereinafter, also referred to as abrasive particles) of the present invention includes, as shown in Fig. 3, four steps: a core-forming step A, a shell-forming step B, a solid-liquid-separating step C, and a firing step D.

1. Core-forming step A

In a preferred embodiment of the core-forming step A, a salt of at least one element selected from yttrium (Y), titanium (Ti), strontium (Sr), barium (Ba), samarium (Sm), europium (Eu), gadolinium (Gd), and terbium (Tb) is prepared, and a core 1, i.e., a precursor of an abrasive particle, mainly composed of the salt is formed. The core 1 may be formed so as to further contain a salt of at least one element selected from the group consisting of Ce, Al, Sc, V, Cr, Mn, Fe, Co, Ni, Cu, Zn, Ga, Ge, Zr, In, Sn, Dy, Ho, Er, Tm, Yb, Lu, W, Bi, Th, and alkaline earth metals.

Specifically, in the core-forming step A, for example, a salt of yttrium and a precipitant are dissolved in water to prepare a solution having a predetermined concentration; and the solution is heated at 80°C or more with stirring to produce seed crystals of core 1. In the core-forming step A, a solution of a salt of yttrium is further added to the prepared solution, and the resulting solution is heated at 80°C or more with stirring. Thus, in the core-forming step A, a basic carbonate salt insoluble in water, e. g. , basic yttrium carbonate ($Y(OH)CO_3$ or $Y(OH)CO_3 \cdot xH_2O$, e.g., x = 1) is prepared, and the basic yttrium carbonate is allowed to grow on the outside of the seed crystal to form the core 1, a precursor of an abrasive particle. In the following description, the solution that has been applied to heating with stirring is referred to as a reaction solution.

The salt of at least one element selected from yttrium (Y), titanium (Ti), strontium (Sr), barium (Ba), samarium (Sm), europium (Eu), gadolinium (Gd), and terbium (Tb) and the optional salt of at least one element selected from the group consisting of Ce, Al, Sc, V, Cr, Mn, Fe, Co, Ni, Cu, Zn, Ga, Ge, Zr, In, Sn, Dy, Ho, Er, Tm, Yb, Lu, W, Bi, Th, and alkaline earth metals to be solved in water in the core-forming step A can be, for example, a nitrate, a hydrochloride, or a sulfate and is preferably a nitrate (e.g., yttrium nitrate, titanium nitrate, strontium nitrate, barium nitrate, samarium nitrate, europium nitrate, gadolinium nitrate, or terbium nitrate), which is low in contamination of products with impurities.

The precipitant may be any alkaline compound that generates a basic carbonate salt when it is heated in water together with the above-mentioned salt of an element, and preferred examples thereof include urea compounds, ammonium carbonate, and ammonium hydrogen carbonate.

Examples of the urea compounds include salts of urea (e.g. , nitrates and hydrochlorides), N,N'-dimethyl acetyl urea, N,N'-dibenzoyl urea, benzene sulfonyl urea, p-toluenesulfonyl urea, trimethyl urea, tetraethyl urea, tetramethyl urea, triphenyl urea, tetraphenyl urea, N-benzoyl urea, methyl isourea, and ethyl isourea, and urea. Among the urea compounds, particularly preferred is urea, which gradually hydrolyzes to slowly generate uniform precipitates.

In addition, generation of a basic carbonate salt insoluble in water, such as basic yttrium carbonate, allows the deposited precipitate to be dispersed in a monodispersed state . Furthermore, since a basic carbonate salt of cerium is formed also in the shell-forming step B described below, a continuous layer structure of the basic carbonate salt can be formed.

In the following examples, an aqueous yttrium nitrate solution prepared by dissolving yttrium nitrate in water and is added to the reaction solution in the core-forming step A and the shell-forming step B. Urea is used as a urea compound. These examples are typical, but do not limit the scope of the invention.

In the core-forming step A, the feeding rate of, for example, an aqueous solution containing yttrium is preferably 0.003 to 5.5 mol/L per min, and the solution is preferably added to a reaction solution at 80°C or more with stirring. By controlling the feeding rate within the range, spherical abrasive particles having excellent monodispersity can be readily formed. The heating at 80°C or more with stirring enhances the decomposition of the added urea. The concentration of the urea is preferably 5 to 50 times the yttrium ion concentration. Such concentrations of the yttrium ion and urea in the aqueous solution facilitate synthesis of monodispersed spherical abrasive particles.

The mixer used in the heating and stirring may have any shape and other factors that can provide a sufficient stirring efficiency. In order to further enhance the stirring efficiency, an axial flow mixer of a rotor stator type is preferably used.

2. Shell-forming step B

In a preferred embodiment of the shell-forming step B, to the reaction solution dispersing a basic carbonate salt of at least one element selected from yttrium (Y), titanium (Ti), strontium (Sr), barium (Ba), samarium (Sm), europium (Eu), gadolinium (Gd), and terbium (Tb) prepared in the core-forming step A, a mixture of an aqueous solution of a salt of at least one element selected from these eight elements and an aqueous solution of a salt of cerium (Ce) is added at a constant rate for a predetermined time. Specifically, in a case of using yttrium as the at least one element selected from the eight elements, a shell 2 is formed on the outside of the core 1, a precursor of an abrasive particle containing a basic carbonate salt of yttrium, for example, basic yttrium carbonate ($Y(OH)CO_3$ or $Y(OH)CO_3 \cdot xH_2O$, e.g., x = 1) and a basic carbonate salt, for example, cerium basic carbonate salt ($Ce(OH)CO_3$ or $Ce(OH)CO_3 \cdot xH2O$, e.g., x = 1).

The shell 2 may further contain a salt of at least one element selected from the group consisting of Al, Sc, V, Cr, Mn, Fe, Co, Ni, Cu, Zn, Ga, Ge, Zr, In, Sn, Dy, Ho, Er, Tm, Yb, Lu, W, Bi, Th, and alkaline earth metals.

Since the salt of cerium used in preparation of the aqueous solution is preferably a nitrate, which is low in contamination of products with impurities, a case of using cerium nitrate is shown, but the salt is not limited thereto and may be a salt such as a hydrochloride or sulfate salt.

The feeding rate of the aqueous solution added in the shell-forming step B is preferably 0.003 to 5.5 mol/L per min. Such a feeding rate can easily form spherical abrasive particles having excellent monodispersity.

The concentration of cerium contained in the aqueous solution to be added is preferably 90 mol% or less. If the cerium content is higher than 90 mol%, the resulting abrasive particles formed by addition of such an aqueous solution with the same period of time as that in an aqueous solution having a content of 90 mol% or less do not show monodispersity and aggregate into a plate form in some cases.

The reaction solution is preferably heated at 80°C or more with stirring when the aqueous solution is added at the above-mentioned feeding rate. Heating at 80°C or more with stirring accelerates decomposition of urea added in the core-forming step A.

3. Solid-liquid-separating step C

The solid-liquid-separating step C separates the precursor of the inorganic core/shell particles P, provided with the shell 2 in the shell-forming step B, from the reaction solution. In the solid-liquid-separating step C, the resulting precursor of the inorganic core/shell particles P is optionally dried, and the step may be then shifted to the firing step D.

4. Firing step D

The firing step D fires the precursor of the inorganic core/shell particles P obtained in the solid-liquid-separating step C in the air or an oxidative atmosphere within a temperature range of 500°C to 1200°C for 1 to 5 hr. The firing eliminates carbon dioxide from the precursor of the inorganic core/shell particles P. As a result, the basic carbonate salt is converted into an oxide to give intended inorganic core/shell particles P.

Particles having crystallite diameters suitable for an abrasive material probably grow during the firing within the firing temperature and time ranges mentioned above to give inorganic core/shell particles P having hardness sufficient for polishing. Here, the term "crystallite" refers to a maximum region regarded as a single crystal. Specifically, as shown in Fig. 2, one particle is composed of a plurality of crystallites. Since the growth rate of crystallites depends on the firing temperature and time, an abrasive material containing inorganic core/shell particles having a crystallite diameter suitable for an abrasive material probably can be produced by firing at 500°C to 1200°C for 1 to 5 hr.

A specific firing apparatus for firing the precursor of the inorganic core/shell particles P is preferably a known roller hearth kiln or rotary kiln. Such an apparatus can uniformly heat the precursor of the inorganic core/shell particles P contained in an abrasive material.

Since a typical roller hearth kiln includes, for example, a plurality of rollers in the furnace and conveys a raw material on the rollers, the furnace can be divided into regions at different temperatures, for example, calcination, firing, and cooling temperatures. A typical rotary kiln is, for example, approximately cylindrical and gradually conveys a raw material which is slowly rolling.

Calcination D' is preferably performed after the solid-liquid-separating step C and before the firing step D. Specifically, the calcination D' is preferably performed within a firing temperature range of 300°C to 490°C for 1 to 5 hr. Calcination D' under such conditions probably allows the crystallites in the core 1 to sufficiently grow to give an abrasive material containing inorganic core/shell particles P having high durability against the pressure during polishing. In particular, the calcination D' is preferably performed within a temperature range of 300°C to 400°C for 2 to 3 hr to sufficient growth of the crystallites.

A known roller hearth kiln or rotary kiln can be used also in calcination D' as in the firing step D.

The firing temperature in the firing step D is preferably raised at a rate of 20°C to 50°C/min. Such an increase probably allows a stable growth of the crystallites of the shell 2 containing a large amount of cerium.

After the firing step D, the temperature is preferably decreased from 500°C to room temperature (25°C) at a cooling rate of 1°C to 20°C/min. Such a decrease probably can inhibit occurrence of minute cracks between the core 1 and the shell 2 and strengthen the bonding between the layers to form inorganic core/shell particles P being highly resistive to the pressure during polishing and having smooth outermost surfaces .

Fig. 4 is a graph schematically showing variations in temperature in the calcination D' and the firing step D. As shown in Fig. 4, the precursor of the inorganic core/shell particles P is preferably subjected to calcination D' within a temperature range of 300°C to 490°C for 1 to 5 hr before the firing step D and is then fired within a temperature range of 500°C to 1200°C for 1 to 5 hr. The term "firing" in the firing step D refers to firing within a temperature range of 500°C to 1200°C for 1 to 5 hr. The "calcination D' before the firing step D" refers to calcination within a temperature range of 300°C to 490°C for 1 to 5 hr performed before the firing step D. In the firing step D, the retention time maintaining a constant temperature may not be included in the firing time, in the variation in temperature. The same applies to the calcination D' .

The calcination temperature in the following examples refers to the highest temperature before the firing step D when calcination D' is not performed or the highest temperature in calcination when calcination D' is performed. The calcination time refers to the time for which calcination is performed within a temperature range of 300°C to 490°C. The calcination retention time refers to the time for which the calcination temperature is maintained during the calcination D'. Similarly, the firing temperature is the highest temperature in the firing step D. The firing time refers to the time for which firing is performed within a temperature range of 500°C to 1200°C in the firing step D. The retention time refers to the time for which the highest temperature is maintained in the firing step D. The heating rate refers to a rate of increasing the temperature from 500°C to the highest temperature in the firing step D. The cooling rate refers to a rate of decreasing the temperature from 500°C to room temperature (25°C) after the firing step D.

<Use of abrasive material and deterioration of abrasive material>

A method of using the abrasive material will be described using an example of polishing of a glass substrate.

1. Preparation of slurry of abrasive material

A powder of the abrasive material containing inorganic core/shell particles P is added to a solvent such as water to prepare a slurry of an abrasive material. A dispersant is added to the abrasive material slurry while the slurry being stirred with, for example, a stirrer to prevent aggregation of the slurry or to maintain its dispersion state. The abrasive material slurry is circulated to a polisher through a supply pump.

2. Polishing

A glass substrate is brought into contact with the upper and lower surface plates of a polisher attached with polishing pads (polishing cloth). Polishing is performed by relative movement of the pads and the glass under pressurized conditions while the abrasive material slurry being supplied to the contact surfaces.

3. Deterioration of abrasive material

The abrasive material is used under pressurized conditions as in the polishing. Accordingly, the inorganic core/shell particles P contained in the abrasive material are gradually collapsed to reduce in size with a lapse of polishing time. Since the reduction in size of the inorganic core/shell particles P causes a reduction in the polishing rate, inorganic core/shell particles P are desired to show a less change in the particle size distribution between before and after polishing.

[Examples]

The present invention will now be described in detail by way of examples and comparative examples. The "firing" in the firing step D refers to firing within a temperature range of 500°C to 1200°C for 1 to 5 hr. The "calcination D' before the firing step D" refers to calcination within a temperature range of 300°C to 490°C for 1 to 5 hr before the firing step D. The "calcination temperature" in tables refers to the highest temperature before the firing step D when calcination D' is not performed or the highest temperature in calcination when calcination D' is performed. The "calcination time" refers to the time for which the calcination D' is performed within a temperature range of 300°C to 490°C. The "calcination retention time" refers to the time for which the calcination temperature is maintained in the calcination D'.
Similarly, the "firing temperature" refers to the highest temperature in the firing step D. The "firing time" refers to the time for which firing is performed within a temperature range of 500°C to 1200°C in the firing step D. The "retention time" refers to the time for which the highest temperature is maintained in the firing step D. The "heating rate" refers to a rate of increasing the temperature from 500°C to the highest temperature in the firing step D. The "cooling rate" refers to a rate of decreasing the temperature from 500°C to room temperature (25°C) after the firing step D.

[Example 1]

<Abrasive material 1: Inventive Example>

(1) An aqueous solution (2 L) of 0.02 mol/L yttrium (III) nitrate (hereinafter simply referred to as aqueous yttrium nitrate solution) was prepared, and urea was added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium(III) nitrate solution (hereinafter, simply refers to as aqueous cerium nitrate solution) was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 500°C and fired for 1 hr (in which the retention time was 1 hr) to prepare inorganic core/shell particles P.

<Abrasive material 2: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 1200°C and fired for 5 hr (retention time: 0 hr) to prepare inorganic core/shell particles P.

<Abrasive material 3: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 1200°C and fired for 3 hr (in which the retention time was 0.5 hr) to prepare inorganic core/shell particles P.

<Abrasive material 4: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 500°C and fired for 5 hr (in which the retention time was 5 hr) to prepare inorganic core/shell particles P.

<Abrasive material 5: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was heated to 800°C at a heating rate of 10°C/min and fired for 3 hr (retention time: 0 hr) to prepare inorganic core/shell particles P.

<Abrasive material 6: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was heated to 800°C and fired for 3 hr (in which the retention time was 1 hr) to prepare inorganic core/shell particles P.

<Abrasive material 7: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was heated to 1000°C and fired for 3 hr (in which the retention time was 1 hr) to prepare inorganic core/shell particles P.

<Abrasive material 8: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 1000°C and fired for 5 hr (in which the retention time was 1 hr) to prepare inorganic core/shell particles P.

<Abrasive material 9: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 1200°C and fired for 5 hr (in which the retention time was 1 hr) to prepare inorganic core/shell particles P.

<Abrasive material 10: Comparative Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 300°C and was maintained for 8 hr to prepare inorganic core/shell particles P.

<Abrasive material 11: Comparative Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 500°C and fired for 8 hr (in which the retention time was 8 hr) to prepare inorganic core/shell particles P.

<Evaluation of abrasive materials>

The abrasive materials 1 to 11 were evaluated for the crystallite diameters of core 1 and shell 2, polishing rate, and surface state after polishing in accordance with the following methods.

1. Crystallite diameters of core and shell

X-ray diffractometry of powder was carried out with a powder X-ray diffractometer (manufactured by Rigaku Corporation, MiniFlexII) using CuK $\alpha$-rays as an X-ray source. The crystallite diameter was calculated by the Scherrer equation from the main peak ((111) plane) of the X-ray diffraction.

2. Polishing rate

The polisher used in the polishing process polishes a workpiece surface with polishing cloth while supplying slurry of an abrasive material prepared by dispersing a powder of the abrasive material including inorganic core/shell particles P in a solvent such as water to the workpiece surface. The abrasive material slurry was prepared at a concentration of 100 g/L using only water as the solvent. In the polishing test, a crystallized glass substrate having a diameter of 65 mm was polished under circulated supply of the abrasive material slurry at a flow rate of 5 L/min, using polyurethane polishing cloth, with an abrasion tester at a pressure of 9.8 kPa (100 g/cm$^2$) applied to the surface to be polished at a rotation rate of 100 min$^{-1}$ (rpm) for 30 minutes. The thicknesses before and after polishing were measured with Nikon Digimicro (MF501), and the polished depth ($\mu$m) per minute was calculated as the polishing rate from the change in thickness.

3. Surface state after polishing

The surface state (surface roughness Ra) of a glass substrate polished for 30 min in the measurement of "2. Polishing rate" was evaluated with an optical interference surface roughness meter (manufactured by Zygo Corporation, Dual-channel ZeMapper) . The Ra value represents an arithmetic mean roughness in accordance with JIS B0601-2001.

<Evaluation of abrasive material>

Table 1 summarizes the experimental conditions and the results of the evaluation.

[Table 1]

| Abrasive material No. | Temperature [°C] | Firing time [h] | Retention time [h] | Crystallite diameter of core [nm] | Crystallite diameter of shell [nm] | Polishing rate | Surface state | Note |
|---|---|---|---|---|---|---|---|---|
| 1 | 500 | 1 | 1 | 3 | 10 | Good | Good | Inventive Example |
| 2 | 1200 | 5 | 0 | 50 | 30 | Good | Good | Inventive Example |
| 3 | 1200 | 3 | 0.5 | 50 | 4 | Good | Good | Inventive Example |
| 4 | 500 | 5 | 5 | 4 | 15 | Good | Very good | Inventive Example |
| 5 | 800 | 3 | 0 | 8 | 8.5 | Good | Very good | Inventive Example |
| 6 | 800 | 3 | 1 | 8 | 28 | Good | Very good | Inventive Example |
| 7 | 1000 | 3 | 1 | 9 | 8 | Good | Very good | Inventive Example |
| 8 | 1000 | 5 | 1 | 45 | 30 | Good | Very good | Inventive Example |
| 9 | 1200 | 5 | 1 | 32 | 28 | Good | Very good | Inventive Example |
| 10 | 300 | 0 | 8 | 5 | 3.5 | Not Good | Not good | Comparative Example |
| 11 | 500 | 8 | 8 | 38 | 40 | Not Good | Not good | Comparative Example |

<Evaluation criteria>

Polishing rate:

Very good: a polishing rate of higher than 1.0 μm/min
Good: a polishing rate of 0.3 to 1.0 μm/min
Not good: a polishing rate of less than 0.3 μm/min Surface roughness:

Exquisite: a surface roughness Ra of less than 0.15 μm
Very good: a surface roughness Ra of 0.15 μm or more and less than 0.3 μm
Good: a surface roughness Ra of 0.3 to 0.5 μm
Not good: a surface roughness Ra of larger than 0.5 μm

Table 1 demonstrates that abrasive materials 1 to 3, which are Inventive Examples, each have an average crystallite diameter of shell 2 within a range of 4 to 30 nm, a polishing rate within a range of 0 .3 to 1. 0 μm/min, and a surface roughness Ra, indicating the surface state of a workpiece, within a range of 0.3 to 0.5 μm.

Abrasive materials 4 to 9 each have an average crystallite diameter of shell 2 within a range of 4 to 30 nm and a crystallite diameter of core 1 within a range of 4 to 45 nm, a polishing rate within a range of 0.3 to 1. 0 μm/min, and a surface roughness Ra, indicating the surface state of a workpiece, within a range of 0.15 μm or more and less than 0.3 μm.

Accordingly, these abrasive materials are satisfactory products, and polished workpieces can be suitably used as hard disk devices (HDDs).

In contrast, abrasive materials 10 and 11, which are Comparative Examples, each have a polishing rate of less than 0.3 μm/min and a surface roughness Ra, indicating the surface state of a workpiece, of larger than 0.5 μm. These results demonstrate that Inventive Examples in which the firing in the firing step D was performed within a firing temperature range of 500°C to 1200°C for a firing time 1 to 5 hr provide higher polishing rates and excellent surface states of workpieces, compared to Comparative Examples.

[Example 2]

<Abrasive material 12: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was heated to 300°C and calcined for 1 hr (in which the calcination retention time was 1 hr) and was then heated to 800°C and fired for 3 hr (retention time: 0 hr) to prepare inorganic core/shell particles P.

<Abrasive material 13: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 300°C and calcined for 1 hr (in which the calcination retention time was 1 hr) and was then heated to 1000°C and fired for 3 hr (retention time: 0 hr) to prepare inorganic core/shell particles P.

<Abrasive material 14: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.

(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 300°C and calcined for 1 hr (in which the calcination retention time was 1 hr) and was then heated to 1200°C and fired for 3 hr (retention time: 0 hr) to prepare inorganic core/shell particles P.

<Evaluation of abrasive material>

Table 2 summarizes the experimental conditions and the results of the evaluation. The evaluation was performed as in Example 1.

[Table 2]

| Abrasive material No. | Calcination temperature [°C] | Calcination firing time [h] | Calcination retention time [h] | Temperature [°C] | Firing time [h] | Retention time [h] | Crystallite diameter of core [nm] | Crystallite diameter of shell [nm] | Polishing rate | Surface state | Note |
|---|---|---|---|---|---|---|---|---|---|---|---|
| 5 | – | – | – | 800 | 3 | 0 | 8 | 8.5 | *1 | *2 | *4 |
| 12 | 300 | 1 | 1 | 800 | 3 | 0 | 35 | 30 | *1 | *3 | *4 |
| 13 | 300 | 1 | 1 | 1000 | 3 | 0 | 11 | 10 | *1 | *3 | *4 |
| 14 | 300 | 1 | 1 | 1200 | 3 | 0 | 45 | 4 | *1 | *3 | *4 |

*1: Good    *2: Very good    *3: Exquisite    *4: Inventive Example

Table 2 demonstrates that abrasive materials 12 to 14, which are Inventive Examples, each have an average crystallite diameter of core 1 at least 1 nm larger than the average crystallite diameter of shell 2 and a surface roughness Ra, indicating the surface state of a workpiece, less than 0.15 $\mu$m, which demonstrates that abrasive materials 12 to 14 cause less damages on the surfaces and thus are superior to abrasive material 5. It is believed that the calcination facilitates the growth of the crystallites forming core 1 to give inorganic core/shell particles P having high durability against the pressure during polishing and providing workpieces with good surface states.

[Example 3]

<Abrasive material 15: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was, in the firing step D, heated from 500°C to 800°C at a heating rate of 15°C/min and was fired for 3 hr (retention time: 0 hr) to prepare inorganic core/shell particles P.

<Abrasive material 16: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was, in the firing step D, heated from 500°C to 800°C at a heating rate of 20°C/min and was fired for 3 hr (retention time: 0 hr) to prepare inorganic core/shell particles P.

<Abrasive material 17: Inventive Example>

(1) A 0.02 mol/L aqueous yttrium nitrate solution (2 L) was prepared, and urea was then added to the aqueous solution to give a mixture containing 0.60 mol/L of urea. The mixture was stirred at 90°C to produce seed crystals.
(2) An aqueous yttrium nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous yttrium nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was, in the firing step D, heated from 500°C to 800°C at a heating rate of 50°C/min and was fired for 3 hr (retention time: 0 hr) to prepare inorganic core/shell particles P.

<Evaluation of abrasive material>

Table 3 summarizes the experimental conditions and the results of the evaluation. The evaluation was performed as in Example 1.

[Table 3]

| Abrasive material No. | Temperature [°C] | Firing time [h] | Retention time [h] | Heating rate [°C/min] | Crystallite diameter of core [nm] | Crystallite diameter of shell [nm] | Polishing rate | Surface state | Note |
|---|---|---|---|---|---|---|---|---|---|
| 5 | 800 | 3 | 0 | 10 | 8 | 8.5 | Good | Very good | *1 |
| 15 | 800 | 3 | 0 | 15 | 14 | 15 | Very good | Very good | *1 |
| 16 | 800 | 3 | 0 | 20 | 18 | 25 | Very good | Very good | *1 |
| 17 | 800 | 3 | 0 | 50 | 4 | 30 | Very good | Very good | *1 |

*1: Inventive Example

Table 3 demonstrates that abrasive materials 15 to 17, which are Inventive Examples, each have an average crystallite diameter of shell 2 at least 1 nm larger than the crystallite average diameter of core 1 and a polishing rate of higher than 1.0 $\mu$m/min, which demonstrates that abrasive materials 15 to 17 have higher polishing rates than that of abrasive material 5 to show higher productivity and are thus more satisfactory abrasive materials allowing a reduction in the amount. It is believed that a heating rate of 20°C to 50°C/min in the firing step D allows the crystallites of shell 2 containing a large amount of cerium to stably grow to give excellent abrasive materials having higher polishing rates.

[Example 4]

<Abrasive material 18: Inventive Example>

(1) A 0.02 mol/L aqueous titanium(IV) nitrate solution (2 L) was prepared, and urea was then added to the aqueous solution to give a mixture containing 0.60 mol/L of urea. The mixture was stirred at 90°C.
(2) An aqueous titanium(IV) nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous titanium(IV) nitrate solution and 1.12 mol/L aqueous cerium nitrate solution was added to the reaction solution prepared in step (2) at a feeding rate of 1 mL/min for 65 min with stirring at 90°C to form shell 2.
(4) A precursor of inorganic core/shell particles P precipitated from the reaction solution prepared in step (3) was collected with a membrane filter.
(5) The precursor prepared in step (4) was heated to 800°C at a heating rate of 10°C/min and was fired for 3 hr (retention time: 0 hr) to prepare inorganic core/shell particles P.

<Abrasive material 19: Inventive Example>

(1) A 0.02 mol/L aqueous strontium(II) nitrate solution (2 L) was prepared, and urea was then added to the aqueous solution to give a mixture containing 0.60 mol/L of urea. The mixture was stirred at 90°C.
(2) An aqueous strontium(II) nitrate solution having a concentration of 1.6 mol/L was added to the reaction solution prepared in step (1) at a feeding rate of 1 mL/min for 65 min with stirring at 90°C to form core 1 of a basic carbonate salt.
(3) A mixture of 0.48 mol/L aqueous strontium(II) nitrate solution and 1.12 mol/L aqueous cerium nitrate solution was added to the reaction solution prepared in step (2) at a feeding rate of 1 mL/min for 65 min with stirring at 90°C to form shell 2 .
(4) A precursor of inorganic core/shell particles P precipitated from the reaction solution prepared in step (3) was collected with a membrane filter.
(5) The precursor prepared in step (4) was heated to 800°C at a heating rate of 10°C/min and was fired for 3 hr (retention time: 0 hr) to prepare inorganic core/shell particles P.

<Abrasive material 20: Inventive Example>

(1) A 0.02 mol/L aqueous barium(II) nitrate solution (2 L) was prepared, and urea was then added to the aqueous solution to give a mixture containing 0.60 mol/L of urea. The mixture was stirred at 90°C.

(2) An aqueous barium(II) nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous barium(II) nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 800°C at a heating rate of 10°C/min and was fired for 3 hr (retention time: 0 hr) to prepare inorganic core/shell particles P.

<Abrasive material 21: Inventive Example>

(1) A 0.02 mol/L aqueous samarium(III) nitrate solution (2 L) was prepared, and urea was then added to the aqueous solution to give a mixture containing 0.60 mol/L of urea. The mixture was stirred at 90°C.

(2) An aqueous samarium(III) nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous samarium (III) nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 800°C at a heating rate of 10°C/min and was fired for 3 hr (retention time: 0 hr) to prepare inorganic core/shell particles P.

<Abrasive material 22: Inventive Example>

(1) A 0.02 mol/L aqueous europium (III) nitrate solution (2 L) was prepared, and urea was then added to the aqueous solution to give a mixture containing 0.60 mol/L of urea. The mixture was stirred at 90°C.

(2) An aqueous europium(III) nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous europium (III) nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 800°C at a heating rate of 10°C/min and was fired for 3 hr (retention time: 0 hr) to prepare inorganic core/shell particles P.

<Abrasive material 23: Inventive Example>

(1) A 0.02 mol/L aqueous gadolinium (III) nitrate solution (2 L) was prepared, and urea was then added to the aqueous solution to give a mixture containing 0.60 mol/L of urea. The mixture was stirred at 90°C.

(2) An aqueous gadolinium(III) nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous gadolinium(III) nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 800°C at a heating rate of 10°C/min and was fired for 3 hr (retention time: 0 hr) to prepare inorganic core/shell particles P.

<Abrasive material 24: Inventive Example>

(1) A 0.02 mol/L aqueous terbium(III) nitrate solution (2 L) was prepared, and urea was then added to the aqueous solution to give a mixture containing 0.60 mol/L of urea. The mixture was stirred at 90°C.

(2) An aqueous terbium(III) nitrate solution having a concentration of 1.6 mol/L was added to the reaction solution prepared in step (1) at a feeding rate of 1 mL/min for 65 min with stirring at 90°C to form core 1 of a basic carbonate salt.

(3) A mixture of 0.48 mol/L aqueous terbium(III) nitrate solution and 1.12 mol/L aqueous cerium nitrate solution was added to the reaction solution prepared in step (2) at a feeding rate of 1 mL/min for 65 min with stirring at 90°C to form shell 2.

(4) A precursor of inorganic core/shell particles P precipitated from the reaction solution prepared in step (3) was collected with a membrane filter.

(5) The precursor prepared in step (4) was heated to 800°C at a heating rate of 10°C/min and was fired for 3 hr (retention time: 0 hr) to prepare inorganic core/shell particles P.

<Evaluation of abrasive material>

Table 4 summarizes the experimental conditions and the results of the evaluation. The evaluation was performed as in Example 1.

[Table 4]

| Abrasive material No. | Temperature [°C] | Firing time [h] | Retention time [h] | Crystallite diameter of core [nm] | Crystallite diameter of shell [nm] | Polishing rate | Surface state | Note |
|---|---|---|---|---|---|---|---|---|
| 5 | 800 | 3 | 0 | 8 | 8.5 | Good | Very good | Inventive Example |
| 18 | 800 | 3 | 0 | 15 | 17 | Good | Very good | Inventive Example |
| 19 | 800 | 3 | 0 | 7 | 8.5 | Good | Very good | Inventive Example |
| 20 | 800 | 3 | 0 | 6 | 9 | Good | Very good | Inventive Example |
| 21 | 800 | 3 | 0 | 10 | 11 | Good | Very good | Inventive Example |
| 22 | 800 | 3 | 0 | 7.5 | 8 | Good | Very good | Inventive Example |
| 23 | 800 | 3 | 0 | 11 | 14 | Good | Very good | Inventive Example |
| 24 | 800 | 3 | 0 | 14 | 15 | Good | Very good | Inventive Example |

Table 4 demonstrates that abrasive materials 18 to 24, which are Inventive Examples, are excellent abrasive materials, like abrasive material 5. It is believed that the elements used in abrasive materials 18 to 24 are resistive to the pressure applied to core 1 during polishing, as in yttrium, and are also contained in the shell 2 together with cerium to enhance the bonding strength in the shell itself and between the core and the shell.

INDUSTRIAL APPLICABILITY

The present invention has usability in the field of polishing with an abrasive material containing cerium oxide in the process of producing, for example, glass products, semiconductor devices, and crystal oscillators.

REFERENCE NUMERALS

1:      core
2:      shell
A:      core-forming step
B:      shell-forming step
C:      solid-liquid-separating step
D:      firing step
D':     calcination
P:      inorganic core/shell particle

## Claims

1.  An inorganic core/shell particle to be contained in an abrasive material, the inorganic core/shell particle comprising:

    a core containing a salt of at least one element selected from yttrium (Y), titanium (Ti), strontium (Sr), barium (Ba), samarium (Sm), europium (Eu), gadolinium (Gd), and terbium (Tb); and
    a shell containing a salt of at least one element selected from these eight elements and a salt of cerium (Ce), wherein
    the shell comprises crystallites having an average diameter within a range of 4 to 30 nm.

2.  The inorganic core/shell particle according to Claim 1, wherein the core comprises crystallites having an average diameter within a range of 4 to 45 nm.

3.  The inorganic core/shell particle according to Claim 1 or 2, wherein the crystallites in the core have an average diameter at least 1 nm larger than the average diameter of the crystallites in the shell.

4.  The inorganic core/shell particle according to Claim 1 or 2, wherein the crystallites in the shell have an average diameter at least 1 nm larger than the average diameter of the crystallites in the core.

5.  The inorganic core/shell particle according to any one of Claims 1 to 4, wherein the shell contains the salt of cerium in a proportion within a range of 30 to 90 mol%.

## Patentansprüche

1.  Anorganischer Kern/Schale-Partikel, welcher in einem Schleifmaterial enthalten sein soll, wobei der anorganische Kern/Schale-Partikel umfasst:

    einen Kern, welcher ein Salz zumindest eines Elements ausgewählt aus Yttrium (Y), Titan (Ti), Strontium (Sr), Barium (Ba), Samarium (Sm), Europium (Eu), Gadolinium (Gd) und Terbium (Tb) enthält; und
    eine Schale, welche ein Salz zumindest eines Elements ausgewählt aus diesen acht Elementen sowie ein Salz von Cer (Ce) enthält,
    wobei die Schale Kristallite mit einem mittleren Durchmesser in einem Bereich von 4 bis 30 nm umfasst.

2.  Anorganischer Kern/Schale-Partikel gemäß Anspruch 1, wobei der Kern Kristallite mit einem mittleren Durchmesser in einem Bereich von 4 bis 45 nm umfasst.

3.  Anorganischer Kern/Schale-Partikel gemäß Anspruch 1 oder 2, wobei die im Kern befindlichen Kristallite einen mittleren Durchmesser aufweisen, welcher zumindest 1 nm größer ist als der mittlere Durchmesser der in der Schale befindlichen Kristallite.

**4.** Anorganischer Kern/Schale-Partikel gemäß Anspruch 1 oder 2, wobei die in der Schale befindlichen Kristallite einen mittleren Durchmesser aufweisen, welcher zumindest 1 nm größer ist als der mittlere Durchmesser der im Kern befindlichen Kristallite.

**5.** Anorganischer Kern/Schale-Partikel gemäß einem der Ansprüche 1 bis 4, wobei die Schale das Cer-Salz in einem Anteil enthält, welcher in einem Bereich von 30 bis 90 Mol% liegt.

**Revendications**

**1.** Particule inorganique de type cœur/coquille destinée à être contenue dans un matériau abrasif, la particule inorganique de type cœur/coquille comprenant :

un cœur contenant un sel d'au moins un élément choisi parmi l'yttrium (Y), le titane (Ti), le strontium (Sr), le baryum (Ba), le samarium (Sm), l'europium (Eu), le gadolinium (Gd) et le terbium (Tb) ; et
une coquille contenant un sel d'au moins un élément choisi parmi ces huit éléments et un sel de cérium (Ce), dans laquelle
la coquille comprend des cristallites ayant un diamètre moyen dans une plage de 4 à 30 nm.

**2.** Particule inorganique de type cœur/coquille selon la revendication 1, dans laquelle le cœur comprend des cristallites ayant un diamètre moyen dans une plage de 4 à 45 nm.

**3.** Particule inorganique de type cœur/coquille selon la revendication 1 ou 2, dans laquelle les cristallites dans le cœur ont un diamètre moyen qui est plus grand d'au moins 1 nm que le diamètre moyen des cristallites dans la coquille.

**4.** Particule inorganique de type cœur/coquille selon la revendication 1 ou 2, dans laquelle les cristallites dans la coquille ont un diamètre moyen qui est plus grand d'au moins 1 nm que le diamètre moyen des cristallites dans le cœur.

**5.** Particule inorganique de type cœur/coquille selon l'une quelconque des revendications 1 à 4, dans laquelle la coquille contient le sel de cérium dans une proportion se situant dans une plage de 30 à 90 % en moles.

# FIG.1

# FIG.2

crystallite

particle diameter

# FIG.3

A       B       C       D

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006097014 A
- WO 2014038536 A1
- WO 2014045939 A1
- CN 101555387 A

**Non-patent literature cited in the description**

- *J. Am. Ceram. Soc.,* 1988, vol. 71 (10), 845-853